# EUROPEAN PATENT SPECIFICATION

(11) **EP 4 512 748 B1**
(45) Date of publication and mention of the grant of the patent: **31.12.2025**
(21) Application number: 24188357.8
(22) Date of filing: 12.07.2024
(51) Int. Cl.: B65G 13/11, B65G 37/00, B65G 47/52, B65G 65/00, B66F 9/06

(54) **PALLET SYSTEM**
PALETTENSYSTEM
SYSTÈME DE PALETTE

(30) Priority: 24.08.2023 NL 2035671
(43) Date of publication of application: 26.02.2025
(73) Proprietor: Ubbink B.V., 6984 AA Doesburg (NL)
(72) Inventor: VRUGGINK, Marcel, 6984 AA Doesburg (NL)
(74) Representative: Geurts, Franciscus Antonius

(56) References cited:
- EP-A1- 4 071 089
- EP-A1- 4 071 093
- JP-A- H 082 650

## Description

### BACKGROUND

The invention relates to a pallet system for transferring a load from a pallet to a conveyor, the pallet system comprising a load, a pallet for holding the load thereon, a transport device with a lifting device for vertical and horizontal movement of the pallet, and a conveyor for the load.

The use of pallets for storage of load thereon and/or moving the pallet with the load thereon is well known. By using a forklift or something like that the pallet is easily lifted and displaced between two locations.

JP H08 2650 A discloses a pallet system for unloading a pallet having a load thereon from a carriage onto a conveyor device according to the preamble of claim 1.

### SUMMARY OF THE INVENTION

A disadvantage of the current pallet systems is that in order to transfer a load from a pallet to a conveyor, and thereby separating the load from the pallet, a further transferring device or technique is needed. Pallet unloading is generally performed by gripping the load from above or from the side, for example by a pick-up device or human operator, such that the load is transferred to the conveyor. This system of separating results in the use of extra manpower or equipment, increasing the costs and slowing down the transferring process.

It is an object of the present invention to ameliorate or to eliminate one or more disadvantages of the known pallet systems, or at least to provide an alternative pallet system.

According to a first aspect, the invention provides a pallet system for transferring a load from a pallet to a conveyor, the pallet system comprising:
a load having a bottom with a rectangular outline and a load width,
a pallet having a pallet width for holding the load, having a load receiving surface for receiving and supporting the bottom of the load thereon,
a transport device configured for displacing the pallet, wherein the transport device comprises a lifting device that is configured for carrying the pallet and for vertical displacement of the pallet, and
a conveyor device having a receiving end, wherein the conveyor device is configured for receiving the load at the receiving end thereof and for transporting the load in a transport direction away from the receiving end, wherein the conveyor device comprises a left conveyor and a right conveyor at a conveyor height that are parallelly arranged and spaced from each other at a distance so as to define a pallet pass-through opening therebetween, wherein the pallet pass-through opening has a pallet pass-through opening width,
wherein the load width is larger than the pallet width so that the load projects from the pallet,
wherein the load projects from the pallet at two opposite sides of the pallet in the width direction,
wherein the load has a left projecting portion having a left downwardly directed support surface, wherein the left projecting portion projects from the pallet by a left projecting distance, wherein the load has a right projecting portion having a right downwardly directed support surface, wherein the right projecting portion projects from the pallet by a right projecting distance,
wherein the load width is larger than the pallet pass-through opening width,
wherein the pallet width is smaller than the pallet pass-through opening width,
wherein the left conveyor has a left upwardly directed support surface configured for receiving the left downwardly directed support surface thereon, wherein the right conveyor has a right upwardly directed support surface configured for receiving the right downwardly directed support surface thereon, and
wherein the left downwardly directed support surface fits on the left upwardly directed support surface, and the right downwardly directed support surface fits on the right upwardly directed support surface when the pallet with the load thereon is lifted through the pallet pass-through opening.

In the pallet system according to the invention, the load is transferred from the pallet to the conveyor device by the transport device without the need of a pick-up device or a human being. The load is transferred to the conveyor device, and the pallet can directly be moved away from below the load by the transport device. This makes transferring the load from the pallet to the conveyor device, in for example a warehouse, easier, faster, less complex, and cheaper.

In an embodiment the load receiving surface has a rectangular outline.

In an embodiment the left projecting distance is at least 5% of the load width, and wherein the right projecting distance is at least 5% of the load width.

In an embodiment the left upwardly directed support surface has a left conveyor width, and the right upwardly directed support surface has a right conveyor width, wherein the left conveyor width is at least 5% of the load width, wherein the right conveyor width is at least 5% of the load width, and wherein the load width minus the pallet pass-through opening width is at least 10% of the load width.

In an embodiment the pallet width is at least 50% of the load width.

In an embodiment the left conveyor and the right conveyor are roller conveyors.

In an embodiment the left upwardly directed support surface and the right upwardly directed support surface are horizontally arranged.

In an embodiment the left upwardly directed support surface and the right upwardly directed support surface are arranged at an inclination angle.

In an embodiment the left upwardly directed support surface and the right upwardly directed support surface slope downwards away from the receiving end.

In an embodiment the transport device is an automated guided vehicle or forklift.

In an embodiment the load has a bottom wall, a left side wall, a right side wall opposite the left side wall, a front wall, and a back wall opposite the front wall.

In an embodiment thereof the load further has a top wall opposite the bottom wall.

In an embodiment the load is a cardboard box.

According to a second aspect, the invention provides a method for transferring a load from a pallet to a conveyor using a pallet system according to any of claims 1-13, wherein the method comprises
by the lifting device, displacing the pallet having the load thereon in a vertical displacement direction above the conveyor height,
by the transport device, displacing the pallet having the load thereon towards the conveyor device in a receiving direction that is in the vertical projection parallel to the transport direction of the conveyor device,
by the lifting device, displacing the pallet having the load thereon from a height above the conveyor height, through the pallet pass-through opening, to a height below the conveyor height, such that the left downwardly directed support surface lands on the left upwardly directed support surface and the right downwardly directed support surface lands on the right upwardly directed support surface, and the load is transferred from the pallet while the pallet remains at the lifting device,
by the transport device, removing the pallet without the load thereon away from the conveyor device.

### BRIEF DESCRIPTION OF THE DRAWINGS

The invention will be elucidated on the basis of an exemplary embodiment shown in the attached drawings, in which:
Figures 1 - 5 show isometric views of a pallet system in five subsequent steps in its operation according to a first embodiment of the invention.
Figures 6 - 7 show isometric views of a pallet system in two subsequent steps in its operation according to a second embodiment of the invention.

### DETAILED DESCRIPTION OF THE INVENTION

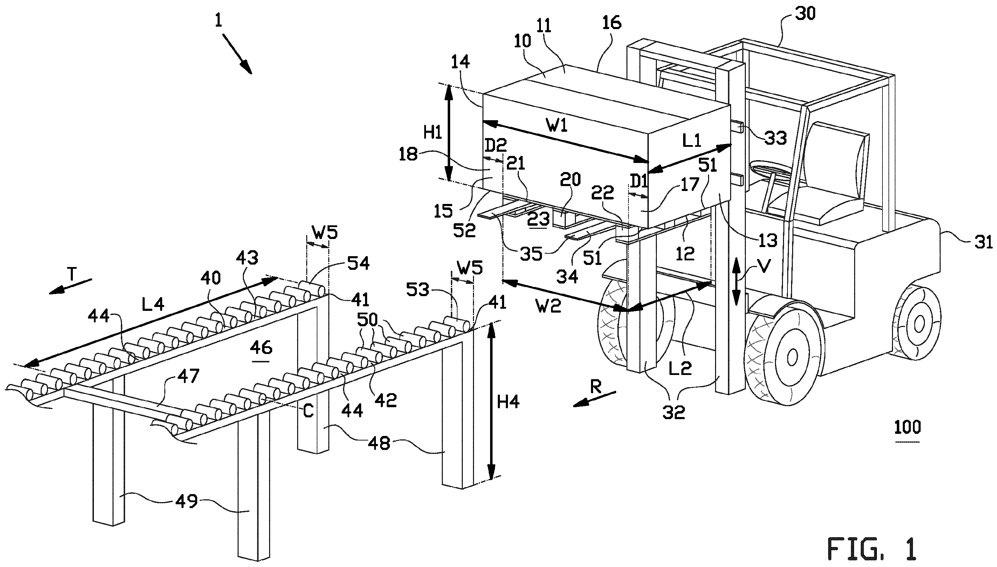

A schematic overview of a pallet system 1 according to a first embodiment of the invention is shown in Figures 1-5. The pallet system 1 comprises a load 10, a pallet 20, a transport device 30 and a conveyor 40.

In this example the load 10 is a rectangular-shaped box that comprises a bottom wall 12, a left side wall 13, a right side wall 14 opposite the left side wall 13, a front wall 15, a back wall 16 opposite the front wall 15, and, optionally, a top wall 11 opposite the bottom wall 12. The load 10 has a load length L1 between the front wall 15 and the back wall 16, a load width W1 between the left side wall 13 and the right side wall 14, and a load height H1 between the bottom wall 12 and the top wall 11.

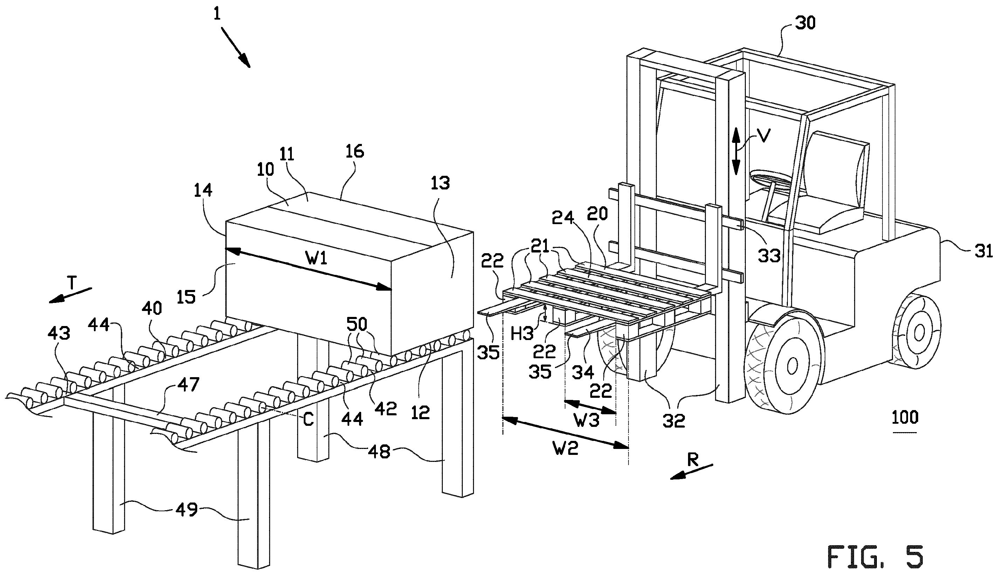

As best shown in Figure 5, the pallet system 1 comprises a standard rectangular-shaped pallet 20, e.g. a EUR-pallet, that comprises in this example three parallelly arranged supporting structures 22 and five parallelly arranged top slats 21. The supporting structures 22 are spaced from each other, and the top slats 21 are transversely arranged on the supporting structures 22, such that the supporting structures 22 and top slats 21 define two insertion channels 23 therebetween, as shown in Figure 1. The insertion channels 23 have an insertion channel height H3, which corresponds to the height of the supporting structures 22, and an insertion channel width W3 which corresponds to a distance at which the supporting structures 22 are spaced from each other. The top slats 21 define a load receiving surface 24 with a rectangular outline for receiving the load 10 thereon. The pallet 20 has a pallet width W2, which corresponds to the length of the top slats 21, a pallet height, which is the combined height of the supporting structure 22 and the top slat 21, and a pallet length L2, which corresponds to the length of the supporting structures 22.

The load 10 is positioned on the pallet 20 by arranging the bottom wall 12 of the load 10 on the load receiving surface 24 of the pallet 20. The load 10 projects from the pallet 20 at both sides of the load receiving surface 24 in the longitudinal direction of the top slats 21. The load 10 projects from the pallet 20 at the left side wall 13 by a left projecting portion 17 having a left downwardly directed support surface 51 at the bottom wall 12. As shown in figure 1, the left projecting portion 17 projects from the pallet 20 by a left projecting distance D1. At the opposite right side wall 14, the load 10 projects from the pallet 20 by a right projecting portion 18 having a right downwardly directed support surface 52 at the bottom wall 12. The right projecting portion 18 projects from the pallet 20 by a right projecting distance D2.

The pallet system 1 further comprises a transport device, in this example an electrically driven forklift 30 that is adapted to drive over an underground 100. The forklift 30 comprises a forklift body 31, a mast 32 and a carriage 33. The carriage 33 is displaceable in a vertical displacement direction or lifting direction V along the mast 32. The carriage 33 comprises a fork 34 with two horizontal arranged fork teeth 35. The insertion channels 23 of the pallet 20 are configured for receiving the fork teeth 35 of the forklift 30 therein. The fork teeth 35 have a fork teeth height that is smaller than the insertion channel height H3 and a fork teeth width that is smaller than the insertion channel width W3, such that the fork teeth 35 can easily be inserted into the insertion channels 23 with margin. The forklift 30 is configured to hold the pallet 20 by inserting the two fork teeth 35 into the insertion channels 23 of the pallet 20 and lifting the fork 34 by displacing the carriage 33 upwards in the vertical lifting direction V along the mast 32.

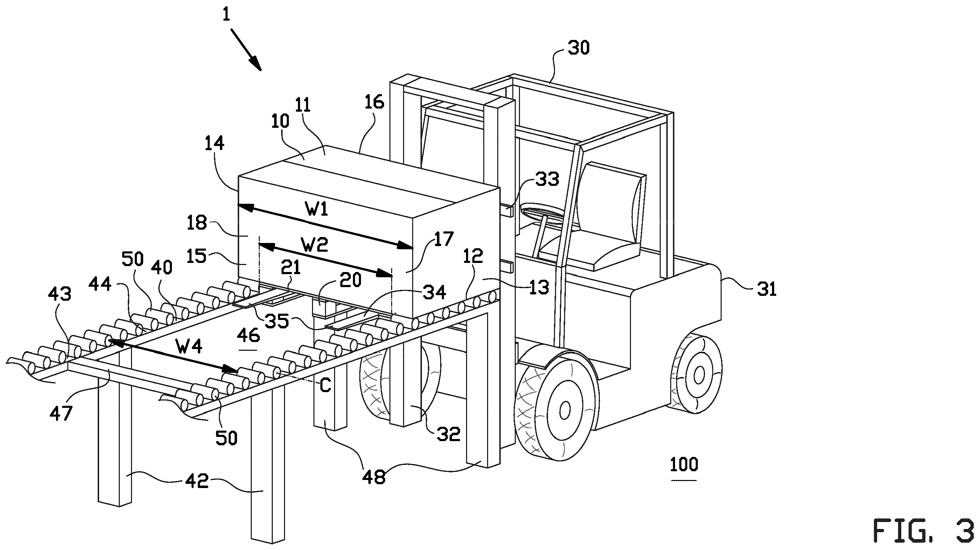

The pallet system 1 further comprises a horizontally arranged conveyor 40 configured for receiving the load 10 at a receiving end 41 thereof and for transporting the load 10 away from the receiving end 41 in a transport direction T, for example, towards a non-shown delivery end. The conveyor 40 comprises a left roller conveyor 42 and a right roller conveyor 43. Both the left roller conveyor 42 and the right roller conveyor 43 comprise a horizontal beam 44 and multiple vertical beams 48, 49 that support the horizontal beams 44. The left roller conveyor 42 and the right roller conveyor 43 are spaced from each other so as to create a pallet pass-through opening 46 therebetween having an opening width W4, as best shown in Figures 1 and 3. The left roller conveyor 42 and the right roller conveyor 43 are connected via a connecting beam 47.

The horizontal beams 44 of the conveyor 40 are provided with rollers 50 thereon. Each roller 50 having a roll axis C around which the roller 50 can freely rotate. Multiple rollers 50 are arranged on each horizontal beam 44, wherein for each horizontal beam 44 the rollers 50 are arranged side by side with the roll axes C parallel to each other and horizontal arranged, and with the roll axes C being transverse to the longitudinal direction of the horizontal beams 44.

The left roller conveyor 42 has a left upwardly directed support surface 53 that is formed by the upwardly facing parts of the outline of the rollers 50 that are arranged at the left conveyor 42. The left upwardly directed support surface 53 is configured to receive the left downwardly directed support surface 51 of the load 10 thereon. The right roller conveyor 43 has a right upwardly directed support surface 54 that is formed by the upwardly facing parts of the outline of the rollers 50 that are arranged at the right roller conveyor 43. The right upwardly directed support surface 54 is configured to receive the right downwardly directed support surface 52 of the load 10 thereon.

Both the left roller conveyor 42, and the right roller conveyor 43 have a conveyor width W5 which corresponds to a length of each roller 50 in axial direction. This conveyor width W5 is also corresponding to the width of the left upwardly directed support surface 53 and the right upwardly directed support surface 54.

The conveyor 40 is configured to receive the load 10 which is transported on the pallet 20 towards the conveyor 40 by the forklift 30. The pallet pass-through opening 46 has an opening length L4 extending from the receiving end 41 towards the connecting beam 47, wherein the opening length L4 is larger than the pallet length L2, so that the pallet 20 can be received in and pass through the pallet pass-through opening 46 between the connecting beam 47 and the receiving end 41. Further, the opening width W4 is slightly wider than the pallet width W2, so that the pallet 20 can pass through the left roller conveyor 42 and the right roller conveyor 43 via the pallet pass-through opening 46 by margin. At the receiving end 41 the conveyor 40 has a conveyor height H4, which conveyor height H4 is at least larger than the pallet height.

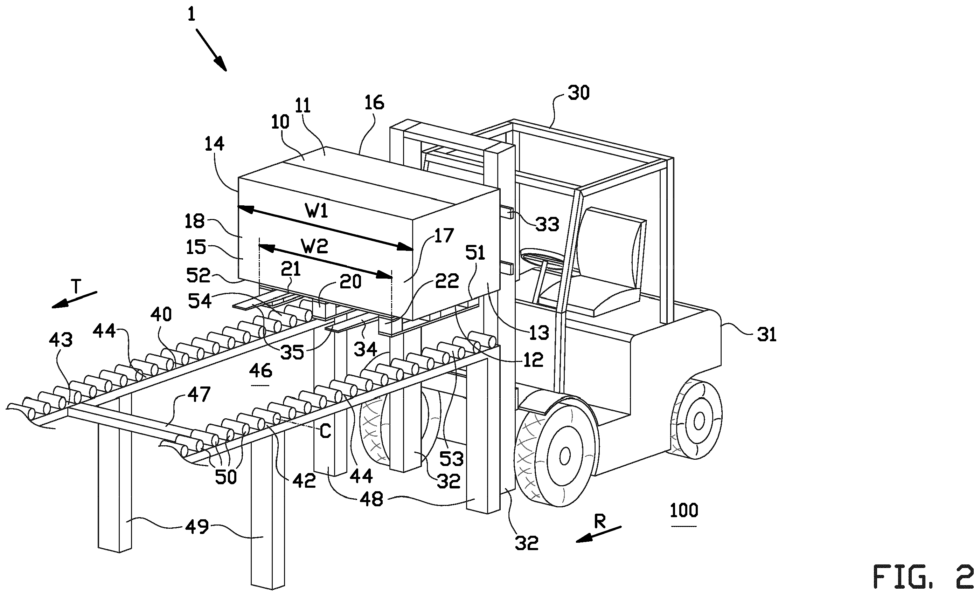

Figure 1 shows the pallet system 1 in the situation wherein the load 10 is provided on the pallet 20, and wherein the pallet 20 is lifted high by the forklift 30. The pallet 20 is lifted to a height above the conveyor height H4. The forklift 30 drives over the underground 100 towards the conveyor 40 and is received by the conveyor 40 in a horizontal receiving direction R that is parallel to the transport direction T. The conveyor 40 is received at the receiving end 41 of the conveyor 40, such that the pallet 20 at the fork 34 of the forklift 30 is aligned with and positioned above the pallet pass-through opening 46, as shown in Figure 2.

Then the pallet 20 which is lifted by the forklift 30 is lowered in the vertical lifting direction V to a height below the conveyor height H4. Since the pallet width W2 is smaller than the opening width W4, the pallet 20 passes through the pallet pass-through opening 46, and since the load width W1 is larger than the opening width W4, the load 10 does not pass through the pallet pass-through opening 46. Therefore, the load 10 is transferred to the conveyor 40 on top of the rollers 50 thereof.

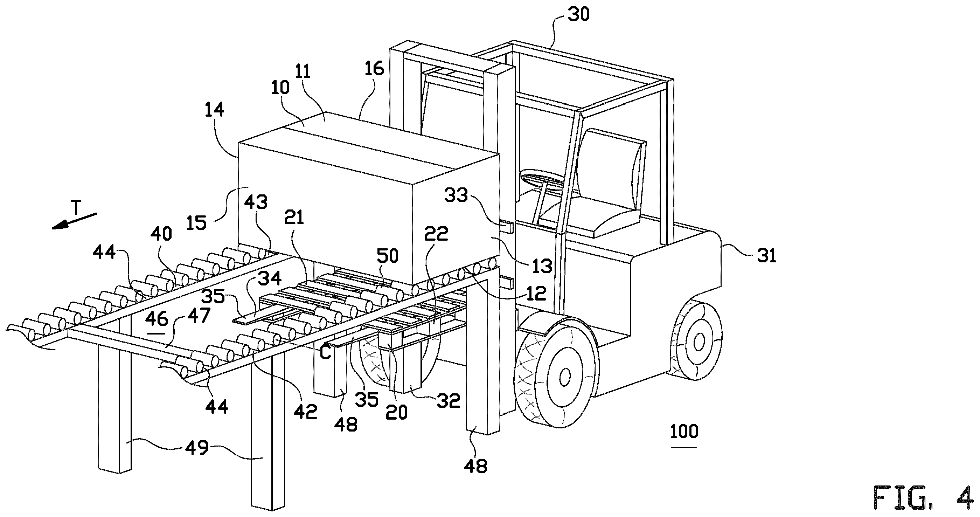

The left downwardly directed support surface 51 of the load 10 corresponding to the left projecting portion 17 lands on top of the rollers 50 at the left conveyor 42 on the left upwardly directed support surface 53. The right downwardly directed support surface 52 of the load 10 lands on top of the rollers 50 at the right conveyor 43 on the right upwardly directed support surface 54. The pallet 20 without the load 10 remains at the fork 34 of the forklift 30, as shown in Figures 3 and 4. Lastly, as shown in Figure 5, the forklift 30 drives, over the underground 100, away from the conveyor 40.

The conveyor 40 is configured for transporting the load 10, that is received thereon, away from the receiving end 41 in a transport direction T, for example towards the non-shown delivery end.

The left projecting distance D1 of the left projecting portion 17 is at least 5% of the load width W1, and the right projecting distance D2 of the right projecting portion 18 is at least 5% of the load width W1. The left projecting distance D1 can differ from the right projecting distance D2. The pallet width W2 is at least 50% of the load width W1.

The roller conveyor width W5 is in this example similar for the left roller conveyor 42 and the right roller conveyor 43, but the roller conveyor width W5 can be different for the left roller conveyor 42 and the right roller conveyor 43. The left roller conveyor width W5 and the right roller conveyor width W5 are each at least 5% of the load width W1. Further, the load width W1 minus the left roller conveyor width W5 and minus the right roller conveyor width W5 is at least 10% of the load width W1. The pallet width W2 is at least 50% of the load width W1.

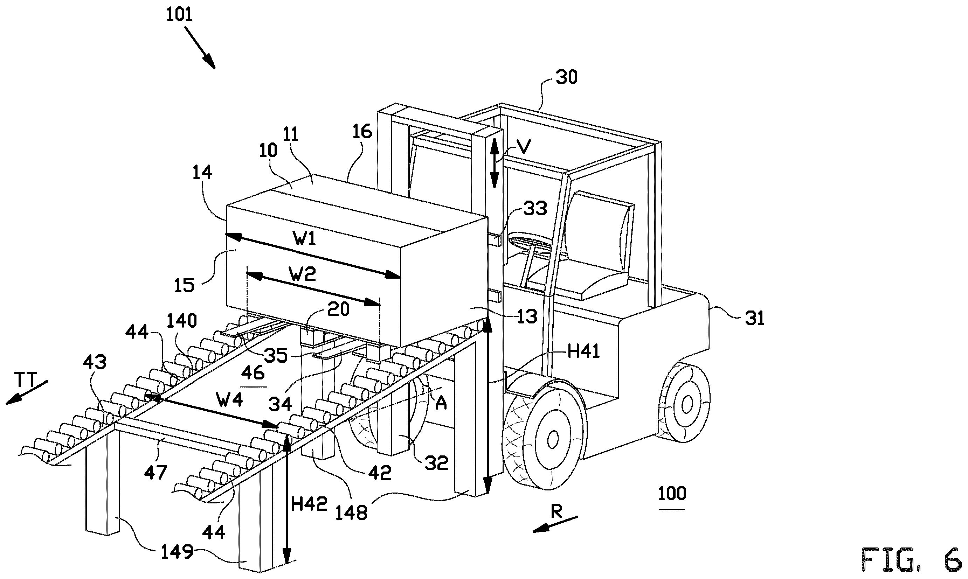

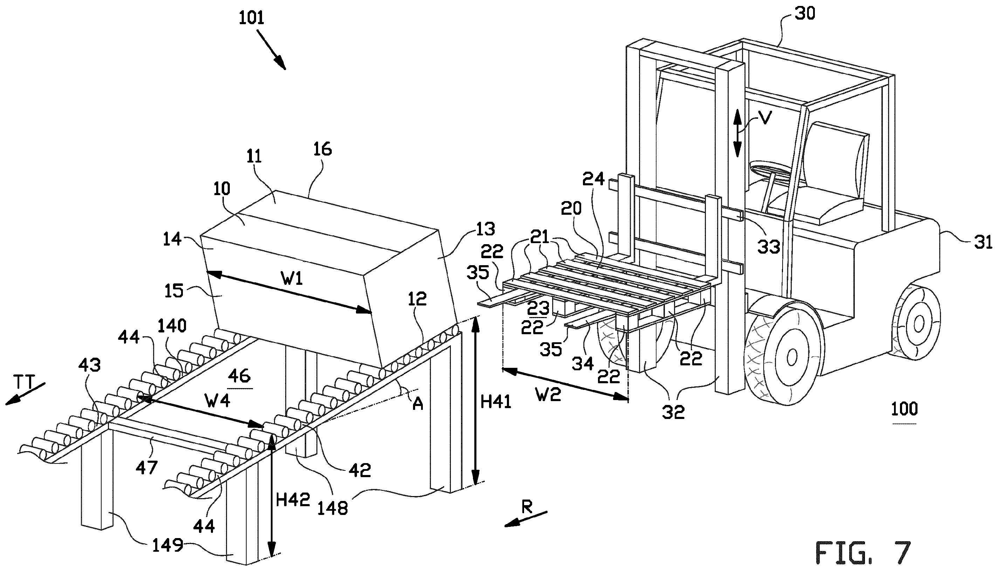

In a second embodiment of the pallet system, as shown in figures 6 and 7, the pallet system 101 comprises a conveyor 140 that is inclined under an inclination angle A. An exemplary embodiment of this is shown in Figures 6 and 7. In the exemplary embodiment, the pallet system 101 comprises, except for some components of the conveyor and the conveyor itself, the same components as the pallet system according to the exemplary embodiment described before. Components that are different compared to the first exemplary embodiment are reintroduced and renumbered in the description and in Figures 6 and 7.

The horizontal beams 44 of the conveyor are supported by a first set of vertical beams 148 having a first beam height H41, and a second set of vertical beams 149 having a second beam height H42. The first beam height H41 is larger than the second beam height H42, resulting in the horizontal beams 44 being arranged under the inclination angle A.

When the pallet system 101 is in use, the load 10 is provided on the pallet 20, and the pallet 20 is lifted high by the forklift 30. The pallet 20 is lifted to a heigh above the first beam height H41. The forklift 30 drives over the underground 100 towards the conveyor 140 in the receiving direction R, such that the pallet 20 is aligned with and positioned above the pallet pass-through opening 46, as shown in Figure 6.

Then the pallet 20 which is lifted by the forklift 30 is lowered in the vertical lifting direction V to a height below the first beam height H41. Since the pallet width W2 is smaller than the opening width W4, the pallet passes through the pallet pass-through opening 46, and since the load width W1 is larger than the opening width W4, the load 10 does not pass through the pallet pass-through opening 46. Therefore, the load 10 is transferred to the conveyor 140 on top of the rollers 50 thereof.

The parts of the left downwardly directed support surface 51 and the right downwardly directed support surface 52 of the load 10 that are closest to the back wall 16 touch the rollers 50 of the conveyor 140 first at the parts of the left upwardly directed support surface 53 and the right upwardly directed support surface 54 that are closest to the receiving end 41.

When the pallet 10 is further lifted downwards the load 10 tilts by its own weight until its bottom wall 12 is parallel to the transport direction TT of the conveyor 140, as shown in Figure 7. The left projecting portion 17 lands on top of the rollers 50 arranged on the horizontal beam 44 of the left roller conveyor 42 and the right projecting portion 18 lands on top of the rollers 50 arranged on the horizontal beam 44 of the right roller conveyor 43. The pallet 20 without the load 10 remains on the fork 34 of the forklift 30. Lastly, the forklift 30 drives over the underground 100, away from the conveyor 140.

The conveyor 140 is configured for transporting the load 10 away from the receiving end 41 in a transport direction TT towards a non-shown delivery end.

## Claims

1. Pallet system (1, 101) for transferring a load (10) from a pallet (20) to a conveyor (40, 140), the pallet system (1, 101) comprising:
a load (10) having a bottom (12) with a rectangular outline and a load width (W1),
a pallet (20) having a pallet width (W2) for holding the load (10), having a load receiving surface (24) for receiving and supporting the bottom (12) of the load (10) thereon,
a transport device (30) configured for displacing the pallet (20), wherein the transport device (30) comprises a lifting device (33) that is configured for carrying the pallet (20) and for vertical displacement of the pallet (20), and
a conveyor device (40, 140) having a receiving end (41), wherein the conveyor device (40, 140) is configured for receiving the load (10) at the receiving end (41) thereof and for transporting the load (10) in a transport direction (T, TT) away from the receiving end (41), wherein the conveyor device (40, 140) comprises a left conveyor (42) and a right conveyor (43) at a conveyor height (H4, H41) that are parallelly arranged and spaced from each other at a distance so as to define a pallet pass-through opening (46) therebetween, wherein the pallet pass-through opening (46) has a pallet pass-through opening width (W4), wherein the left conveyor (42) has a left upwardly directed support surface (53) and wherein the right conveyor (43) has a right upwardly directed support surface (54),
**characterized in that** the load width (W1) is larger than the pallet width (W2) so that the load (10) projects from the pallet (20),
wherein the load (10) projects from the pallet (20) at two opposite sides of the pallet (20) in the width direction,
wherein the load (10) has a left projecting portion (17) having a left downwardly directed support surface (51), wherein the left projecting portion (17) projects from the pallet (20) by a left projecting distance (D1), wherein the load (10) has a right projecting portion (18) having a right downwardly directed support surface (52), wherein the right projecting portion (18) projects from the pallet (20) by a right projecting distance (D2),
wherein the load width (W1) is larger than the pallet pass-through opening width (W4),
wherein the pallet width (W2) is smaller than the pallet pass-through opening width (W4),
wherein the left upwardly directed support surface (53) is configured for receiving the left downwardly directed support surface (51) thereon, wherein the right upwardly directed support surface (54) is configured for receiving the right downwardly directed support surface (52) thereon, and
wherein the left downwardly directed support surface (51) fits on the left upwardly directed support surface (53), and the right downwardly directed support surface (52) fits on the right upwardly directed support surface (54) when the pallet (20) with the load (10) thereon is lifted through the pallet pass-through opening (46).

2. Pallet system (1, 101) according to claim 1, wherein the load receiving surface (24) has a rectangular outline.

3. Pallet system (1, 101) according to any of the preceding claims, wherein the left projecting distance (D1) is at least 5% of the load width (W1), and wherein the right projecting distance (D2) is at least 5% of the load width (W1).

4. Pallet system (1, 101) according to any of the preceding claims, wherein the left upwardly directed support surface (53) has a left conveyor width (W5), and the right upwardly directed support surface (53) has a right conveyor width (W5), wherein the left conveyor width (W5) is at least 5% of the load width (W1), wherein the right conveyor width (W5) is at least 5% of the load width (W1), and wherein the load width (W1) minus the pallet pass-through opening width (W4) is at least 10% of the load width (W1).

5. Pallet system (1, 101) according to any of the preceding claims, wherein the pallet width (W2) is at least 50% of the load width (W1).

6. Pallet system (1, 101) according to any of the preceding claims, wherein the left conveyor (42) and the right conveyor (43) are roller conveyors.

7. Pallet system (1) according to any of the preceding claims, wherein the left upwardly directed support surface (53) and the right upwardly directed support surface (54) are horizontally arranged.

8. Pallet system (101) according to any of claims 1-6, wherein the left upwardly directed support surface (53) and the right upwardly directed support surface (54) are arranged at an inclination angle (A).

9. Pallet system (101) according to claim 8, wherein the left upwardly directed support surface (53) and the right upwardly directed support surface (54) slope downwards away from the receiving end (41).

10. Pallet system (1, 101) according to any of the preceding claims, wherein the transport device (30) is an automated guided vehicle or forklift.

11. Pallet system (1, 101) according to any of the preceding claims, wherein the load (10) has a bottom wall (12), a left side wall (13), a right side wall (14) opposite the left side wall (13), a front wall (15), and a back wall (16) opposite the front wall (15).

12. Pallet system (1, 101) according to claim 11, wherein the load (10) further has a top wall (11) opposite the bottom wall (12).

13. Pallet system (1, 101) according to any of the preceding claims, wherein the load (10) is a cardboard box.

14. Method for transferring a load (10) from a pallet (20) to a conveyor (40, 140) using a pallet system (1, 101) according to any of the preceding claims, wherein the method comprises
by the lifting device (33), displacing the pallet (20) having the load (10) thereon in a vertical displacement direction (V) above the conveyor height (H4, H41),
by the transport device (30), displacing the pallet (20) having the load (10) thereon towards the conveyor device (40, 140) in a receiving direction (R) that is in the vertical projection parallel to the transport direction (T, TT) of the conveyor device (40, 140),
by the lifting device (33), displacing the pallet (20) having the load (10) thereon from a height above the conveyor height (H4, H41), through the pallet pass-through opening (46), to a height below the conveyor height (H4, H41), such that the left downwardly directed support surface (51) lands on the left upwardly directed support surface (52) and the right downwardly directed support surface (53) lands on the right upwardly directed support surface (54), and the load (10) is transferred from the pallet (20) while the pallet (20) remains at the lifting device (33),
by the transport device (30), removing the pallet (20) without the load (10) thereon away from the conveyor device (40, 140).

## Patentansprüche

1. Palettensystem (1, 101) zum Übertragen einer Last (10) von einer Palette (20) auf eine Fördervorrichtung (40, 140), wobei das Palettensystem (1, 101) aufweist:
eine Last (10) mit einem Boden (12) mit einer rechteckigen Kontur und einer Lastbreite (W1);
eine Palette (20) mit einer Palettenbreite (W2) zum Halten der Last (10), mit einer Lastaufnahmefläche (24) zum Aufnehmen und Tragen des Bodens (12) der Last (10) darauf;
eine Transportvorrichtung (30), die dafür konfiguriert ist, die Palette (20) zu versetzen, wobei die Transportvorrichtung (30) eine Hebevorrichtung (33) aufweist, die dafür konfiguriert ist, die Palette (20) zu tragen und die Palette (20) vertikal zu versetzen; und
eine Fördervorrichtung (40, 140) mit einem Aufnahmeende (41), wobei die Fördervorrichtung (40, 140) dafür konfiguriert ist, die Last (10) an ihrem Aufnahmeende (41) aufzunehmen und die Last (10) in einer Transportrichtung (T, TT) vom Aufnahmeende (41) weg zu transportieren, wobei die Fördervorrichtung (40, 140) eine linke Förderbahn (42) und eine rechte Förderbahn (43) auf einer Förderhöhe (H4, H41) aufweist, die parallel angeordnet und voneinander in einem derartigen Abstand beabstandet sind, dass dazwischen eine Palettendurchgangsöffnung (46) definiert ist, wobei die Palettendurchgangsöffnung (46) eine Palettendurchgangsöffnungsbreite (W4) aufweist, wobei die linke Förderbahn (42) eine linke, nach oben gerichtete Auflagefläche (53) aufweist, und wobei die rechte Förderbahn (43) eine rechte, nach oben gerichtete Auflagefläche (54) aufweist,
**dadurch gekennzeichnet, dass** die Lastbreite (W1) größer ist als die Palettenbreite (W2), so dass die Last (10) von der Palette (20) hervorsteht,
wobei die Last (10) an zwei gegenüberliegenden Seiten der Palette (20) in der Breitenrichtung hervorsteht,
wobei die Last (10) einen linken hervorstehenden Abschnitt (17) mit einer linken, nach unten gerichteten Auflagefläche (51) aufweist, wobei der linke hervorstehende Abschnitt (17) um ein linkes Vorsprungmaß (D1) von der Palette (20) hervorsteht, wobei die Last (10) einen rechten hervorstehenden Abschnitt (18) mit einer rechten, nach unten gerichteten Auflagefläche (52) aufweist, wobei der rechte hervorstehende Abschnitt (18) um ein rechtes Vorsprungmaß (D2) von der Palette (20) hervorsteht,
wobei die Lastbreite (W1) größer ist als die Palettendurchgangsöffnungsbreite (W4),
wobei die Palettenbreite (W2) kleiner ist als die Palettendurchgangsöffnungsbreite (W4),
wobei die linke, nach oben gerichtete Auflagefläche (53) dafür konfiguriert ist, die linke, nach unten gerichtete Auflagefläche (51) aufzunehmen, wobei die rechte, nach oben gerichtete Auflagefläche (54) dafür konfiguriert ist, die rechte, nach unten gerichtete Auflagefläche (53) aufzunehmen, und
wobei die linke, nach unten gerichtete Auflagefläche (51) auf die linke, nach oben gerichtete Auflagefläche (53) passt und die rechte, nach unten gerichtete Auflagefläche (52) auf die rechte, nach oben gerichtete Auflagefläche (53) passt, wenn die Palette (20) mit der darauf angeordneten Last (10) durch die Palettendurchgangsöffnung (46) angehoben wird.

2. Palettensystem (1, 101) nach Anspruch 1, wobei die Lastaufnahmefläche (24) eine rechteckige Kontur aufweist.

3. Palettensystem (1, 101) nach einem der vorangehenden Ansprüche, wobei das linke Vorsprungmaß (D1) mindestens 5% der Lastbreite (W1) beträgt, und wobei das rechte Vorsprungmaß (D2) mindestens 5% der Lastbreite (W1) beträgt.

4. Palettensystem (1, 101) nach einem der vorangehenden Ansprüche, wobei die linke, nach oben gerichtete Auflagefläche (53) eine linke Förderbahnbreite (W5) aufweist, und die rechte, nach oben gerichtete Auflagefläche (53) eine rechte Förderbahnbreite (W5) aufweist, wobei die linke Förderbahnbreite (W5) mindestens 5% der Lastbreite (W1) beträgt, wobei die rechte Förderbahnbreite (W5) mindestens 5% der Lastbreite beträgt, und wobei die Lastbreite (W1) abzüglich der Palettendurchgangsöffnungsbreite (W4) mindestens 10% der Lastbreite (W1) beträgt.

5. Palettensystem (1, 101) nach einem der vorangehenden Ansprüche, wobei die Palettenbreite (W2) mindestens 50% der Lastbreite (W1) beträgt.

6. Palettensystem (1, 101) nach einem der vorhergehenden Ansprüche, wobei die linke Förderbahn (42) und die rechte Förderbahn (43) Rollenförderbahnen sind.

7. Palettensystem (1) nach einem der vorangehenden Ansprüche, wobei die linke, nach oben gerichtete Auflagefläche (53) und die rechte, nach oben gerichtete Auflagefläche (54) horizontal angeordnet sind.

8. Palettensystem (101) nach einem der Ansprüche 1 bis 6, wobei die linke, nach oben gerichtete Auflagefläche (53) und die rechte, nach oben gerichtete Auflagefläche (54) in einem Neigungswinkel (A) angeordnet sind.

9. Palettensystem (101) nach Anspruch 8, wobei die linke, nach oben gerichtete Auflagefläche (53) und die rechte, nach oben gerichtete Auflagefläche (54) vom Aufnahmeende (41) weg nach unten geneigt sind.

10. Palettensystem (1, 101) nach einem der vorhergehenden Ansprüche, wobei die Transportvorrichtung (30) ein fahrerloses Transportfahrzeug oder ein Gabelstapler ist.

11. Palettensystem (1, 101) nach einem der vorangehenden Ansprüche, wobei die Last (10) eine Bodenwand (12), eine linke Seitenwand (13), eine der linken Seitenwand (13) gegenüberliegende rechte Seitenwand (14), eine Vorderwand (15) und eine der Vorderwand (15) gegenüberliegende Rückwand (16) aufweist.

12. Palettensystem (1, 101) nach Anspruch 11, wobei die Last (10) ferner eine der Bodenwand (12) gegenüberliegende Deckwand (11) aufweist.

13. Palettensystem (1, 101) nach einem der vorangehenden Ansprüche, wobei die Last (10) ein Karton ist.

14. Verfahren zum Übertragen einer Last (10) von einer Palette (20) auf eine Fördervorrichtung (40, 140) unter Verwendung eines Palettensystems (1, 101) nach einem der vorangehenden Ansprüche, wobei das Verfahren aufweist:
Versetzen der Palette (20) mit der darauf angeordneten Last (10) durch die Hebevorrichtung (33) in einer vertikalen Versatzrichtung (V) über die Förderhöhe (H4, H41); und
Versetzen der Palette (20) mit der darauf angeordneten Last (10) durch die Transportvorrichtung (30) in Richtung der Fördervorrichtung (40, 140) in einer Aufnahmerichtung (R) die in der vertikalen Projektion parallel zur Transportrichtung (T, TT) der Fördervorrichtung (40, 140) ist;
Versetzen der Palette (20) mit der darauf angeordneten Last (10) von einer Höhe über der Förderhöhe (H4, H41) durch die Palettendurchgangsöffnung (46) auf eine Höhe unterhalb der Förderhöhe (H4, H41) durch die Hebevorrichtung (33) derart, dass die linke, nach unten gerichtete Auflagefläche (51) auf der linken, nach oben gerichteten Auflagefläche (52) zum aufliegen kommt und die rechte, nach unten gerichtete Auflagefläche (53) auf der rechten, nach oben gerichteten Auflagefläche (54 ) zum aufliegen kommt und die Last (10) von der Palette (20) übertragen wird, während die Palette (20) an der Hebevorrichtung (33) verbleibt; und
Entfernen der Palette (20) ohne die darauf angeordnete Last (10) von der Fördervorrichtung (40, 140) durch die Transportvorrichtung (30).

## Revendications

1. Système à palette (1, 101) pour transférer une charge (10) d'une palette (20) à un convoyeur (40, 140), le système à palette (1, 101) comprenant :
une charge (10) ayant un fond (12) avec un contour rectangulaire et une largeur de charge (W1) ;
une palette (20) ayant une largeur de palette (W2) pour tenir la charge (10), ayant une surface de réception de charge (24) pour recevoir et supporter le fond (12) de la charge (10) sur celle-ci ;
un dispositif de transport (30) configuré pour déplacer la palette (20), le dispositif de transport (30) comprenant un dispositif de levage (33) qui est configuré pour porter la palette (20) et pour un déplacement vertical de la palette (30), et
un dispositif convoyeur (40, 140) ayant une extrémité de réception (41), le dispositif convoyeur (40, 140) étant configuré pour recevoir la charge (10) à l'extrémité de réception (41) de celui-ci et pour transporter la charge (10) dans une direction de transport (T, TT) à distance de l'extrémité de réception (41), le dispositif convoyeur (40, 140) comprenant un convoyeur gauche (42) et un convoyeur droit (43) à une hauteur de convoyeur (H4, H41) qui sont disposés de façon parallèle et espacés l'un de l'autre à une distance de manière à définir une ouverture de traversée de palette (46) entre eux, l'ouverture de traversée de palette (46) ayant une largeur d'ouverture de traversée de palette (W4), le convoyeur gauche (42) ayant une surface de support gauche orientée vers le haut (53) et le convoyeur droit (43) ayant une surface de support droite orientée vers le haut (54),
**caractérisé par le fait que** la largeur de charge (W1) est supérieure à la largeur de palette (W2) de telle sorte que la charge (10) fait saillie à partir de la palette (20),
dans lequel la charge (10) fait saillie à partir de la palette (20) à deux côtés opposés de la palette (20) dans la direction de la largeur,
dans lequel la charge (10) a une partie saillante gauche (17) ayant une surface de support gauche orientée vers le bas (51), la partie saillante gauche (17) faisant saillie à partir de la palette (20) d'une distance de saillie gauche (D1), la charge (10) ayant une partie saillante droite (18) ayant une surface de support droite orientée vers le bas (52), la partie saillante droite (18) faisant saillie à partir de la palette (20) d'une distance de saillie droite (D2),
dans lequel la largeur de charge (W1) est supérieure à la largeur d'ouverture de traversée de palette (W4),
dans lequel la largeur de palette (W2) est inférieure à la largeur d'ouverture de traversée de palette (W4),
dans lequel la surface de support gauche orientée vers le haut (53) est configurée pour recevoir sur celle-ci la surface de support gauche orientée vers le bas (51), la surface de support droite orientée vers le haut (54) étant configurée pour recevoir sur celle-ci la surface de support droite orientée vers le bas (52), et
dans lequel la surface de support gauche orientée vers le bas (51) s'ajuste sur la surface de support gauche orientée vers le haut (53), et la surface de support droite orientée vers le bas (52) s'ajuste sur la surface de support droite orientée vers le haut (54) lorsque la palette (20) avec la charge (10) sur celle-ci est soulevée à travers l'ouverture de traversée de palette (46).

2. Système à palette (1, 101) selon la revendication 1, dans lequel la surface de réception de charge (24) a un contour rectangulaire.

3. Système à palette (1, 101) selon l'une quelconque des revendications précédentes, dans lequel la distance de saillie gauche (D1) est d'au moins 5% de la largeur de charge (W1), et dans lequel la distance de saillie droite (D2) est d'au moins 5% de la largeur de charge (W1).

4. Système à palette (1, 101) selon l'une quelconque des revendications précédentes, dans lequel la surface de support gauche orientée vers le haut (53) a une largeur de convoyeur gauche (W5), et la surface de support droite orientée vers le haut (53) a une largeur de convoyeur droite (W5), la largeur de convoyeur gauche (W5) étant d'au moins 5% de la largeur de charge (W1), la largeur de convoyeur droite (W5) étant d'au moins 5% de la largeur de charge (W1), et la largeur de charge (W1) moins la largeur d'ouverture de traversée de palette (W4) étant d'au moins 10% de la largeur de charge (W1).

5. Système à palette (1, 101) selon l'une quelconque des revendications précédentes, dans lequel la largeur de palette (W2) est d'au moins 50% de la largeur de charge (W1).

6. Système à palette (1, 101) selon l'une quelconque des revendications précédentes, dans lequel le convoyeur gauche (42) et le convoyeur droit (43) sont des convoyeurs à rouleaux.

7. Système à palette (1) selon l'une quelconque des revendications précédentes, dans lequel la surface de support gauche orientée vers le haut (53) et la surface de support droite orientée vers le haut (54) sont disposées horizontalement.

8. Système à palette (101) selon l'une quelconque des revendications 1 à 6, dans lequel la surface de support gauche orientée vers le haut (53) et la surface de support droite orientée vers le haut (54) sont disposées selon un angle d'inclinaison (A).

9. Système à palette (101) selon la revendication 8, dans lequel la surface de support gauche orientée vers le haut (53) et la surface de support droite orientées vers le haut (54) sont en pente vers le bas en s'éloignant de l'extrémité de réception (41).

10. Système à palette (1, 101) selon l'une quelconque des revendications précédentes, dans lequel le dispositif de transport (30) est un véhicule ou chariot élévateur à guidage automatique.

11. Système à palette (1, 101) selon l'une quelconque des revendications précédentes, dans lequel la charge (10) a une paroi de fond (12), une paroi latérale gauche (13), une paroi latérale droite (14) opposée à la paroi latérale gauche (13), une paroi avant (15) et une paroi arrière (16) opposée à la paroi avant (15).

12. Système à palette (1, 101) selon la revendication 11, dans lequel la charge (10) a en outre une paroi supérieure (11) opposée à la paroi de fond (12).

13. Système à palette (1, 101) selon l'une quelconque des revendications précédentes, dans lequel la charge (10) est une boîte en carton.

14. Procédé de transfert d'une charge (10) d'une palette (20) à un convoyeur (40, 140) à l'aide d'un système à palette (1, 101) selon l'une quelconque des revendications précédentes, le procédé comprenant :
par le dispositif de levage (33), déplacer la palette (20) sur laquelle se trouve la charge (10) dans une direction de déplacement verticale (V) au-dessus de la hauteur de convoyeur (H4, H41) ;
par le dispositif de transport (30), déplacer la palette (20) sur laquelle se trouve la charge (10) vers le dispositif convoyeur (40, 140) dans une direction de réception (R) qui est dans la projection verticale parallèle à la direction de transport (T, TT) du dispositif convoyeur (40, 140) ;
par le dispositif de levage (33), déplacer la palette (20) sur laquelle se trouve la charge (10) d'une hauteur au-dessus de la hauteur de convoyeur (H4, H41), à travers l'ouverture de traversée de palette (46), jusqu'à une hauteur au-dessous de la hauteur de convoyeur (H4, H41), de telle sorte que la surface de support gauche orientée vers le bas (51) se pose sur la surface de support gauche orientée vers le haut (52) et que la surface de support droite orientée vers le bas (53) se pose sur la surface de support droite orientée vers le haut (54), et que la charge (10) est transférée à partir de la palette (20) tandis que la palette (20) reste sur le dispositif de levage (33) ;
par le dispositif de transport (30), retirer la palette (20) sans la charge (10) sur celle-ci pour l'éloigner du dispositif convoyeur (40, 140).
